# FASCICULE DE BREVET EUROPEEN

(11) **EP 2 522 201 B1**
(45) Date de publication et mention de la délivrance du brevet: **16.10.2019**
(21) Numéro de dépôt: 11705001.3
(22) Date de dépôt: 04.01.2011
(51) Int. Cl.: F21V 21/096, F21V 23/04, F21Y 105/00, F21Y 115/10, F21Y 113/13, F21V 8/00, H05B 33/08

(54) **APPAREIL D'ÉCLAIRAGE ET SYSTÈME D'ALIMENTATION PAR INDUCTION D'UN TEL APPAREIL**
BELEUCHTUNGSVORRICHTUNG UND INDUKTIONSSYSTEM ZUR AUSGABE EINER SOLCHEN VORRICHTUNG
LIGHTING APPARATUS AND INDUCTION SYSTEM FOR SUPPLYING SUCH AN APPARATUS

(30) Priorité: 05.01.2010 FR 1000024
(43) Date de publication de la demande: 14.11.2012
(73) Titulaire: Phlox, 13100 Aix-en-Provence (FR)
(72) Inventeur: BLANC, Christophe, F-84160 Lourmarin (FR); CHAZALLET, Frédéric, F-13013 Marseille (FR)
(74) Mandataire: Marchand, André
(86) Numéro de dépôt international: PCT/FR2011/000002
(87) Numéro de publication internationale: WO 2011/083258

(56) Documents cités:
- EP-A1- 2 076 094
- WO-A1-03/085428
- WO-A1-2008/012702
- DE-A1-102006 023 694
- US-A1- 2008 170 398

## Description

### DOMAINE TECHNIQUE

La présente invention est relative à un appareil d'éclairage à diodes luminescentes (LEDs) alimenté par induction, à un système d'alimentation par induction d'un tel appareil, et à un meuble pour l'alimentation par induction d'un tel appareil.

### ETAT DE LA TECHNIQUE

Le brevet US-5264997 décrit un appareil d'éclairage à diodes électroluminescentes (LEDs) alimenté par induction.

L'appareil comporte un boîtier renfermant un circuit imprimé ; un enroulement secondaire formé d'un fil enroulé en spirale est prévu sur une face du circuit imprimé, et les LEDs connectées à l'enroulement secondaire sont disposées sur l'autre face du circuit imprimé.

Le boîtier est solidarisé à une douille comportant un enroulement primaire formant un inducteur pour l'enroulement secondaire. Le boîtier est constitué d'un fond opaque et d'une optique transparente solidarisés par adhésif.

Ce brevet propose de raccorder plusieurs jeux de LEDs en parallèle à l'enroulement secondaire, les LEDs de chaque jeu étant raccordées en série.

Un tel appareil d'éclairage présente un rendement faible et produit un flux lumineux dont l'intensité et la couleur ne sont pas maîtrisées, en raison notamment de la disparité des caractéristiques de LEDs d'un modèle déterminé.

Par ailleurs, il est nécessaire d'adapter le circuit imprimé au nombre et au type de LEDs choisi, et d'adapter le circuit imprimé à la configuration de l'enroulement primaire alimentant ces LEDs.

US2008/170398 décrit un appareil selon le préambule de la revendication 1 comportant un guide de lumière transparent et des LEDs dont le flux lumineux est introduit dans le guide par la tranche du guide. La forme convexe de la face inférieure du guide tend à provoquer la dispersion de la lumière sortant du guide par cette face. Cet appareil d'éclairage présente également un rendement faible.

### EXPOSÉ DE L'INVENTION

Un objectif de l'invention est de proposer un appareil d'éclairage qui soit amélioré et/ou qui remédie, en partie au moins, aux lacunes ou inconvénients des appareils d'éclairage connus.

Selon un aspect de l'invention, il est proposé un appareil d'éclairage comportant une inductance, plusieurs LEDs raccordées à l'inductance, un boîtier ou corps contenant les LEDs, le boîtier comportant des parois opaques entourant (délimitant) une ouverture ; l'appareil comporte en outre un guide de lumière transparent (ou translucide), au moins une face principale du guide comportant des éléments ou motifs diffusants, dont l'espacement mutuel varie de préférence selon au moins un axe. Le guide s'étend en regard de l'ouverture, les LEDs et le guide étant arrangés (disposés) pour que le flux lumineux émis par les LEDs soit, en (grande) partie au moins, introduit (injecté) dans le guide par au moins un bord ou tranche du guide. L'appareil comporte un ou plusieurs aimant(s) solidaire(s) d'au moins une des parois du boîtier et permettant de maintenir l'appareil d'éclairage solidaire d'une paroi incluant un inducteur adapté pour alimenter l'appareil d'éclairage par induction.

Ceci permet d'obtenir un flux lumineux homogène sortant du guide par au moins une de ses deux faces principales.

Selon des modes de réalisation :
- les LEDs sont solidaires d'au moins un circuit imprimé ;
- l'inductance est solidaire d'une des parois opaques du boîtier, en particulier d'une paroi réalisée dans une matière plastique mélangée à une charge minérale ;
- certaines au moins des LEDs présentent un spectre d'émission comportant (au moins) deux maxima pour deux longueurs d'onde respectives qui sont situées dans une plage allant de 400 nanomètres environ à 800 nanomètres environ ;
- l'appareil comporte en outre une capacité et un redresseur raccordés en série avec l'inductance, la capacité formant avec l'inductance un circuit accordé sur une fréquence située dans une plage allant de 10 kHz environ à 30 kHz environ ;
- l'appareil comporte plusieurs LEDs raccordées en série, un interrupteur raccordé en série avec les LEDs, ainsi qu'une unité de commande arrangée pour commander l'ouverture et la fermeture de l'interrupteur ;
- en particulier, l'appareil peut comporter un premier groupe de LEDS présentant un spectre d'émission comportant deux maxima pour deux premières longueurs d'onde, un premier interrupteur raccordé en série avec les LEDs du premier groupe de LEDs, un second groupe de LEDS présentant un spectre d'émission comportant deux maxima pour deux secondes longueurs d'onde dont au moins une est distincte des deux premières longueurs d'onde, un second interrupteur raccordé en série avec les LEDs du second groupe de LEDs, ainsi qu'une unité de commande arrangée pour commander l'ouverture et la fermeture des premier et second interrupteurs ;
- l'appareil comporte un transmetteur radio relié à l'unité de commande et arrangé pour transmettre à l'unité de commande des données de commande transmises à l'appareil d'éclairage par un autre appareil disposé à proximité de l'appareil d'éclairage ;
- l'appareil comporte un capteur de mouvement solidaire du boîtier et relié à l'unité de commande de façon à permettre à l'unité de commande de détecter des mouvements de l'appareil d'éclairage et de modifier en conséquence les signaux de commande délivrés par l'unité de commande aux interrupteurs, en particulier pour faire augmenter ou diminuer le flux lumineux émis par les LEDs en fonction des signaux délivrés par le capteur de mouvement ;
- l'inductance est en forme de spirale et s'étend sensiblement parallèlement au guide de lumière ;
- l'appareil comporte un réflecteur s'étendant contre (ou sur) une face principale du guide ;

Selon un autre aspect de l'invention, il est proposé un système d'alimentation par induction d'un appareil d'éclairage, qui comporte un meuble ou une structure équipé(e) d'un inducteur, un générateur arrangé pour alimenter l'inducteur ; le système peut comporter un appareil de télécommande du générateur et/ou de l'appareil d'éclairage, ainsi qu'au moins un capteur sensible au flux lumineux incident (ambiant), en particulier plusieurs capteurs respectivement sensibles à différentes bandes spectrales du flux lumineux incident (ambiant).

Le (ou les) capteur(s) sensible(s) au flux lumineux incident peut (peuvent) être solidarisé(s) - ou intégré(s) - à l'appareil d'éclairage, à l'appareil de télécommande, au meuble, ou à la structure.

D'autres aspects, caractéristiques, et avantages de l'invention apparaissent dans la description suivante qui se réfère aux figures annexées et illustre, sans aucun caractère limitatif, des modes préférés de réalisation de l'invention.

### BREVE DESCRIPTION DES FIGURES

La figure 1 est un schéma illustrant les principaux composants - et leurs interconnexions - d'un appareil d'éclairage et d'un module d'alimentation par induction de l'appareil d'éclairage, selon un mode de réalisation.
La figure 2 est un schéma illustrant les principaux composants - et leurs interconnexions - d'un appareil d'éclairage selon un autre mode de réalisation.
La figure 3 est un schéma illustrant les principaux composants - et leurs interconnexions - d'un appareil d'éclairage selon encore un autre mode de réalisation.
La figure 4 illustre, en vue en coupe, les principaux composants d'un appareil d'éclairage et un inducteur pour l'alimentation par induction de l'appareil d'éclairage, selon un mode de réalisation.
La figure 5 illustre, en vue en coupe, les principaux composants d'un appareil d'éclairage et un inducteur pour l'alimentation par induction de l'appareil d'éclairage, selon un autre mode de réalisation.
La figure 6 illustre, en vue en coupe, une inductance d'un appareil d'éclairage ou d'un générateur selon un mode de réalisation.
La figure 7 est un schéma illustrant les principaux composants - et leurs interconnexions - d'un module d'alimentation par induction d'un appareil d'éclairage, selon un mode de réalisation.
La figure 8 est un schéma illustrant les principaux composants - et leurs interconnexions - d'un module de télécommande d'un appareil d'éclairage et/ou de télécommande d'un module d'alimentation par induction de cet appareil d'éclairage, selon un mode de réalisation.
La figure 9 illustre, en vue en plan, une inductance d'un appareil d'éclairage ou d'un générateur selon un mode de réalisation.
La figure 10 illustre, en vue en perspective schématique, un meuble équipé d'un système d'alimentation par induction et la figure 11 illustre, du même point de vue que pour la figure 10, le meuble de cette figure auquel est suspendu un appareil d'éclairage.

### DESCRIPTION DETAILLEE DE L'INVENTION

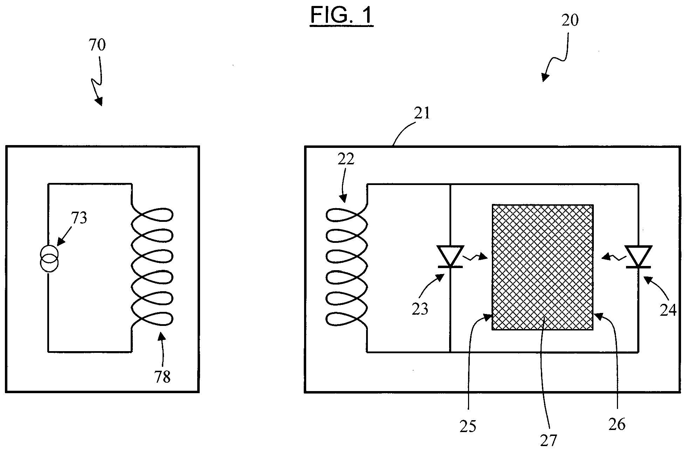

Par référence aux figures 1 à 3 notamment, l'appareil d'éclairage 20 comporte un guide 27 de lumière, mince et transparent, éclairé par ses deux bords ou tranches 25, 26 opposé(e)s, par des LEDs 23, 24 respectivement disposées en regard de ces deux bords.

Selon la puissance lumineuse requise, l'appareil comporte le nombre nécessaire de LEDs qui sont disposées en rangées réparties le long d'une ou plusieurs des faces latérales 25, 26 par lesquelles la lumière émise par les LEDs est introduite dans le guide.

Par référence à la figure 1, les LEDs 23, 24 sont raccordées en parallèle aux bornes d'une inductance 22.

Les LEDs 23, 24 et l'inductance 22 sont disposées à l'intérieur d'un boîtier 21 comportant des parois opaques délimitant une ouverture en regard de laquelle s'étend le guide 27 de lumière.

L'appareil 20 est conçu pour être alimenté par un module 70 d'alimentation qui comporte une inductance 78 connectée aux bornes d'un générateur 73 de courant alternatif.

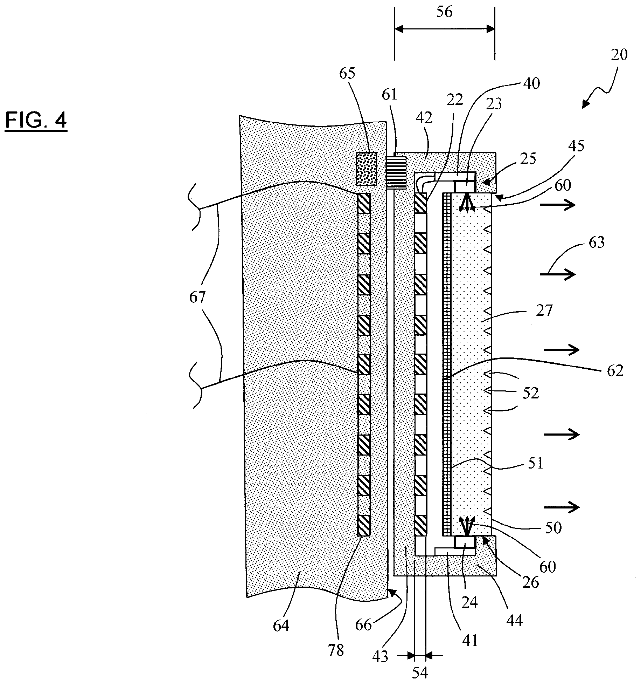

Par référence à la figure 4 notamment, le guide 27 présente deux faces principales 50, 51 (c'est-à-dire les faces de plus grande(s) surface ou dimensions) qui sont sensiblement parallèles, et des faces latérales ou tranches 25, 26 reliant les faces principales 50, 51.

Les faces principales du guide peuvent être planes, notamment lorsque le guide 27 est en forme de plaque plane, ou bien incurvées, par exemple lorsque le guide 27 est en forme de calotte cylindrique ou de plaque cintrée (gauche).

Le guide 27 est réalisé dans un matériau optique tel que du verre, du polycarbonate, ou du polyméthacrylate de méthyle (PMMA), et présente une épaisseur (repère 55 figure 4) située dans une plage allant de un millimètre environ à cinq millimètres environ.

La face principale « avant » 50 du guide est munie de motifs 52 diffusants, et un réflecteur 62 est prévu sur - ou accolé contre - la face « arrière » 51 du guide 27.

Selon un mode de réalisation non représenté, la face principale « arrière » 51 du guide est munie des motifs 52 diffusants. Un réflecteur est prévu sur - ou accolé contre - la face « arrière » du guide, et un film diffuseur est en outre prévu sur - ou accolé contre - la face « avant » du guide 27.

Les motifs ou éléments diffusants 52 peuvent être constitués de saillies ou de dépressions allongées, formées ou disposées sur la face 50.

Les motifs 52 peuvent être essentiellement constituées de rainures formées sur la face 50 à l'aide d'un faisceau laser, dont l'espacement mutuel varie le long d'au moins un axe.

En particulier, l'espacement des rainures peut décroître régulièrement d'une zone périphérique du guide à une zone centrale du guide.

La largeur des rainures diffusantes peut être située dans une plage allant de 50 microns environ à 100 microns environ.

Notamment lorsque le guide est en forme de plaque polygonale, en particulier rectangulaire, les motifs diffusants peuvent s'étendre selon des axes parallèles aux bords du guide, et/ou des axes parallèles aux rangées de LEDs disposées à faible distance de - ou contre - ces bords.

Lorsque le guide est en forme de disque, les motifs diffusants peuvent s'étendre selon des cercles concentriques.

La lumière 60 émise par les LEDs subit des réflexions multiples à l'intérieur du guide 27. Les éléments diffusants 52 provoquent une diffusion de la lumière émise par les LEDs et se propageant dans le guide, vers chacune des deux faces 50, 51 principales opposées du guide 27.

En raison notamment de la présence du réflecteur sur la face 51, les flux lumineux respectivement émis par chacune des LEDs s'ajoutent - se mélangent - et résultent en un flux lumineux homogène 63 qui sort du guide par sa face principale « avant » 50.

Les LEDs 23 et 24 peuvent présenter des spectres d'émission respectifs différents. En particulier, les LEDS 23 présentent un spectre d'émission présentant deux maxima pour deux premières longueurs d'onde, et les LEDS 24 présentent un spectre d'émission présentant deux maxima pour deux secondes longueurs d'onde dont au moins une est distincte des deux premières longueurs d'onde.

Les premières et secondes longueurs d'onde sont généralement situées dans une plage allant de 400 nanomètres environ à 800 nanomètres environ, de sorte que les LEDs 23, 24 peuvent émettre respectivement des flux de lumière « blanche » dont les températures de couleur différent : un flux de lumière bleuâtre dont la température de couleur peut être supérieure à 5500 Kelvin (K), et un flux de lumière jaunâtre dont la température de couleur peut être inférieure à 5500 K, par exemple.

Alternativement ou en complément, certaines des LEDs peuvent émettre dans le domaine de l'infrarouge ou de l'ultraviolet.

Le « mélange », dans le guide 27, des flux lumineux des différentes LEDs permet de compenser les disparités de ces flux « individuels » qui peuvent résulter des disparités constatées pour la tension directe des LEDs d'un modèle déterminé, et à fortiori de compenser les disparités de ces flux résultant de l'emploi de LEDs de modèles distincts - qui présentent des spectres d'émission distincts - .

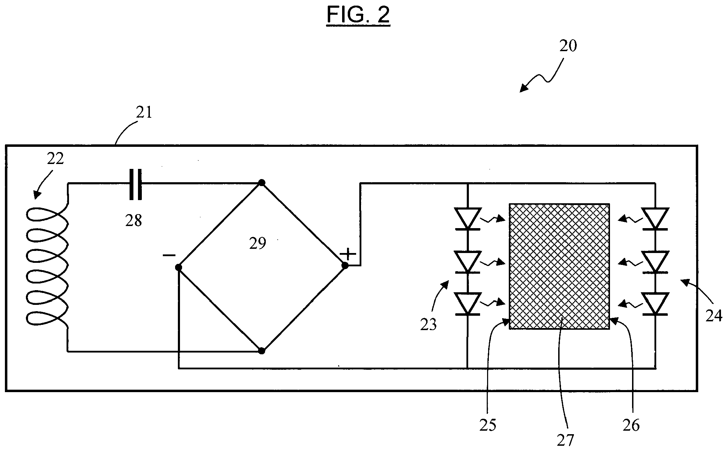

Par référence à la figure 2, l'appareil 20 comporte une capacité 28 et un redresseur 29 raccordés en série avec l'inductance 22.

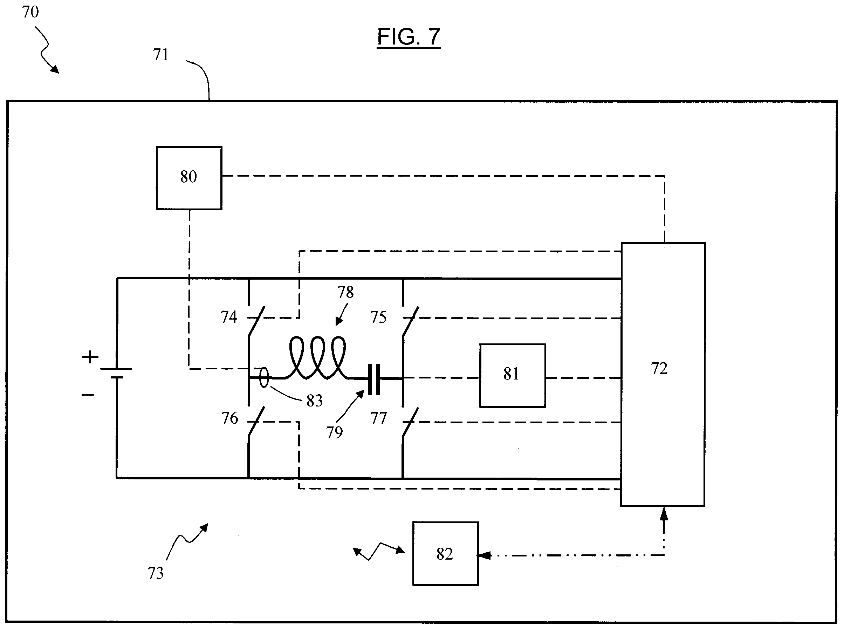

La capacité 28 est choisie pour former, avec l'inductance 22, un circuit oscillant accordé sur - i.e. résonnant à - une fréquence correspondant sensiblement à la fréquence du générateur (repère 70 figures 1 et 7) de courant, dont la valeur peut être située dans une plage allant de 10 à 15 kHz environ, jusqu'à 25 ou 30 kHz environ.

Le redresseur 29 peut être constitué par un pont de diodes délivrant un courant redressé entre ses bornes de sorties, qui alimente au moins deux groupes de LEDS 23, 24 raccordés en parallèle, chaque groupe de LEDs comportant plusieurs LEDS raccordées en série.

Les LEDs 23, 24 de type CMS peuvent être montées sur des circuits imprimés 40, 41 (figure 4) s'étendant en regard des tranches 25, 26 du guide 27.

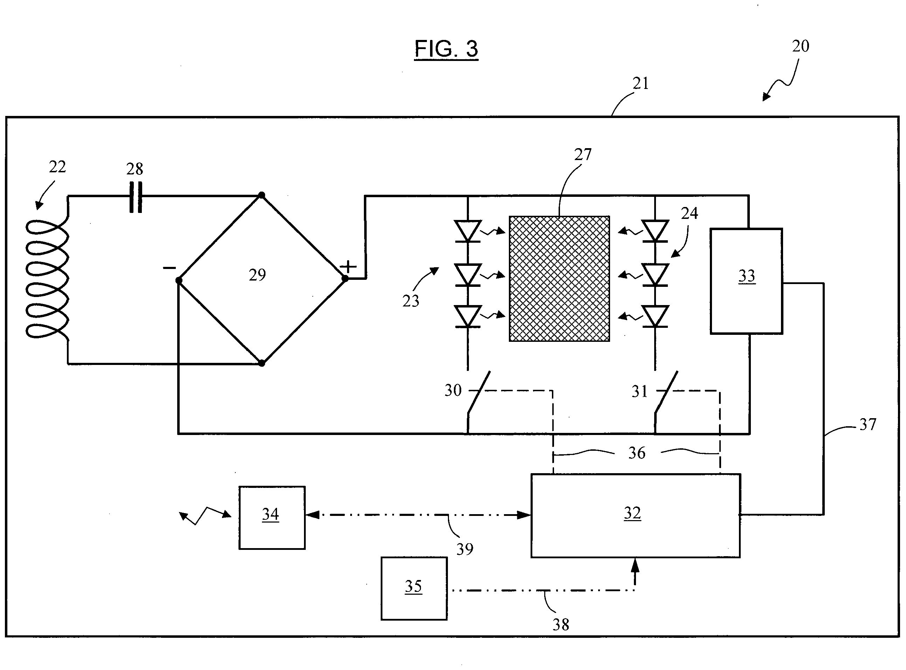

Par référence à la figure 3, l'appareil 20 comporte en outre deux interrupteurs 30, 31 respectivement raccordés en série avec les groupes de LEDs 23, 24.

Chaque interrupteur peut être essentiellement constitué par un transistor, en particulier un transistor à effet de champ de type MOSFET.

L'appareil 20 comporte également une unité de commande 32, telle qu'un micro contrôleur, arrangée (programmée) pour commander l'ouverture et la fermeture des interrupteurs 30, 31, par l'intermédiaire de liaisons 36, pour assurer un éclairement avec l'intensité et le cas échéant la colorimétrie souhaitée.

A cet effet, des modules de commande (non représentés) de type à modulation de largeur d'impulsion (« PWM ») peut être intégrés à l'unité 32 ou interposés entre cette unité et les interrupteurs, pour contrôler l'alimentation des diodes 23, 24.

L'unité de commande 32 est alimentée par un module d'alimentation 33 raccordé aux sorties du redresseur 29, par l'intermédiaire de conducteurs 37.

L'unité de commande 32 est également reliée à un transmetteur 34 de signaux et/ou de données, par une liaison bidirectionnelle 39, ainsi qu'à un capteur 35 de mouvement par une liaison 38.

Le transmetteur 34 peut être essentiellement constitué par un émetteur-récepteur de signaux de commande radio, en particulier un transmetteur Bluetooth®.

Le transmetteur 34 permet à l'unité de commande 32 de recevoir des données de commandes transmises à l'appareil 20 par un autre appareil disposé à proximité de l'appareil 20 et équipé d'un transmetteur compatible avec le transmetteur 34, tel qu'un appareil de télécommande de l'appareil 20.

Le capteur 35 de mouvement peut être essentiellement constitué par un ou plusieurs accéléromètre(s) ou gyromètre(s) solidaires du boîtier 21 de l'appareil 20.

Le capteur 35 peut par exemple comporter deux ou trois accéléromètres respectivement sensibles aux accélérations du boîtier selon deux ou trois axes orthogonaux deux à deux.

Le capteur 35 de mouvement permet à l'unité de commande 32 de détecter des mouvements de l'appareil d'éclairage 20 et de modifier en conséquence les signaux de commande délivrés par l'unité 32 aux interrupteurs 30, 31.

En particulier, l'unité 32 peut être programmée pour faire varier (augmenter ou au contraire diminuer) le flux lumineux émis par les LEDs 23 et/ou par les LEDs 24 en fonction des signaux que lui délivre le capteur 35.

Selon un mode de réalisation, le capteur 35 comporte un premier accéléromètre sensible aux accélérations du boîtier selon un premier axe (une première direction), de manière à permettre à l'unité 32 de faire varier le flux lumineux émis par un premier groupe de LEDs 23 en fonction de mouvements impartis au boîtier par un utilisateur selon cet axe, et le capteur 35 comporte un second accéléromètre sensible aux accélérations du boîtier selon un second axe orthogonal au premier axe, de manière à permettre à l'unité 32 de faire varier le flux lumineux émis par un second groupe de LEDs 24 en fonction de mouvements impartis au boîtier selon ce second axe.

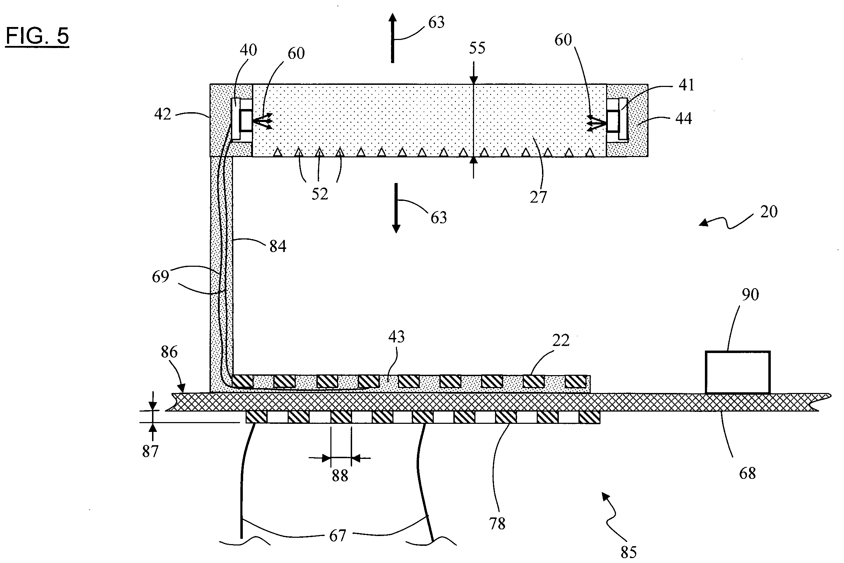

Par référence aux figures 4 et 5, le boîtier comporte une paroi plane 43 formant un fond, et des parois 42, 44 s'étendant à partir de la paroi 43 et délimitant une ouverture 45 qui est fermée par le guide 27.

Les parois opaques 42 à 44 du boîtier et le guide interdisent ainsi la sortie de la lumière 60 injectée par les LEDs dans le guide, hors du boîtier, autrement que par la face avant 50 du guide.

L'inductance 22 est solidaire de la paroi 43 sur la face intérieure de laquelle elle s'étend.

Notamment lorsque le boîtier et la paroi 43 présentent une forme rectangulaire, l'inductance 22 servant d'induit peut être formée par un conducteur présentant une forme de spirale sensiblement rectangulaire ; il peut en être de même concernant l'inductance 78 servant d'inducteur.

L'inductance 22 peut dans certains cas être réalisée sous forme de pistes d'un circuit imprimé, ou par bobinage d'un fil conducteur revêtu d'un isolant; de préférence, cependant, l'inductance 22 est réalisée par découpe ou gravure, à partir d'une feuille d'un matériau conducteur.

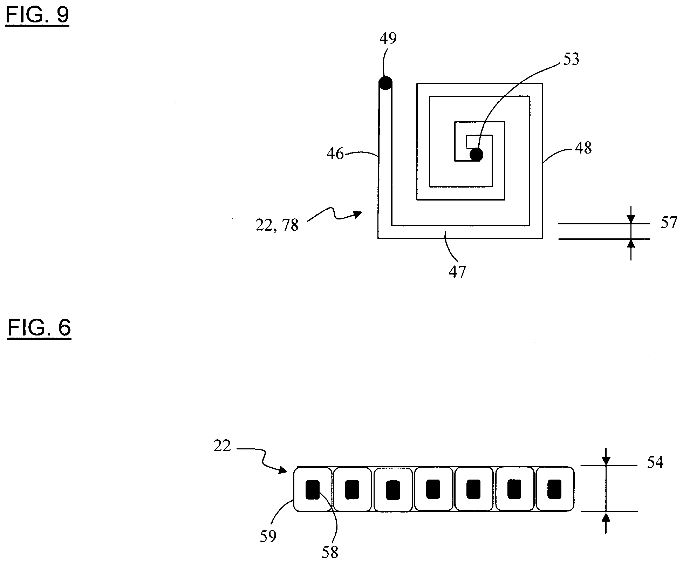

Par référence aux figures 4 et 9 notamment, l'inductance 22 est formée d'une bande ou piste d'un matériau conducteur tel que du cuivre, qui comporte plusieurs segments rectilignes successifs tels que ceux repérés 46 à 48 figure 9.

L'inductance 22 comporte une borne 49, 53 à chacune de ses deux extrémités, pour son raccordement aux composants 28, 29 de l'appareil 20.

L'épaisseur 54 des segments conducteurs de l'inductance 22 peut être située dans une plage allant de 0.2 millimètre environ à 0.6 ou 1 millimètre environ, en particulier de l'ordre de 0.3 à 0.6 millimètre. La largeur 57 de ces segments peut être au moins égale à leur épaisseur.

L'inductance illustrée figure 9 peut être obtenue par gravure ou découpe d'une feuille de cuivre, de façon à ménager un espace suffisant entre deux segments conducteurs adjacents. Le conducteur en spirale ainsi obtenu présente une section sensiblement rectangulaire et peut être revêtu d'un - ou noyé dans un - matériau isolant.

La même technique peut être utilisée pour fabriquer l'inductance 78 du générateur. Dans ce cas, la largeur 88 des segments conducteurs peut être au moins égale au double ou au triple de leur épaisseur 87 (figure 5).

Dans le mode de réalisation de l'inductance 22 qui est illustré figure 6, l'inductance est obtenue par enroulement d'un fil conducteur 58 de section rectangulaire revêtu d'un isolant 59, de façon à former une spirale à « spires » jointives présentant l'épaisseur 54.

Ces procédés de réalisation permettent d'obtenir des inductances susceptibles d'être déformées pour épouser une forme gauche (non plane).

La paroi 43 de fond du boîtier 21 peut présenter une épaisseur de l'ordre d'un ou plusieurs millimètre(s), et le boîtier 21 peut présenter une épaisseur 56 de l'ordre de 10 ou 20 millimètres.

Cette paroi 43 peut être réalisée en matière plastique, en particulier dans une matière plastique comportant une charge minérale sous forme de poudre ou de particules de petite taille.

Dans le mode de réalisation illustré figure 4, un aimant 61 est en partie au moins inclus dans la paroi 43, sur la face extérieure de laquelle l'aimant est sensiblement affleurant.

L'aimant permet de suspendre l'appareil 20 à une paroi 64 verticale incluant un inducteur 78 adapté pour alimenter l'appareil 20 par induction, comme illustré figures 4, 10, et 11.

A cet effet, la paroi comporte une structure métallique 65 disposée sensiblement affleurante à la face externe 66 de la paroi 64, et adaptée pour provoquer, lorsqu'elle est placée dans le champ magnétique de l'aimant 61, une force d'attraction mutuelle entre les parois 43 et 64 qui est suffisante pour compenser le poids de l'appareil 20.

Dans le mode de réalisation illustré figure 5, le boîtier de l'appareil 20 comporte une base 43 plane par laquelle l'appareil repose sur la face supérieure 86 d'un support 68 plan faisant partie d'un meuble 85, la base 43 incorporant l'induit 22.

Le boîtier comporte des parois opaques 42, 44 cerclant le guide 27 et renfermant, avec le guide, les circuits imprimés 40, 41 recevant les LEDs.

Le boîtier comporte également un bras 84 reliant la partie supérieure du boîtier - i.e. les parois 42, 44 - à la base 43. A l'intérieur du bras 84 cheminent des conducteurs 69 servant à relier l'induit 22 aux circuits imprimés 40, 41.

Dans ce mode de réalisation, les motifs 52 diffusants provoquent l'émission du flux lumineux 63 par les deux faces principales du guide.

Le support 68 sous lequel est collé l'inducteur 78 peut former une partie au moins du plateau horizontal d'un meuble 85 tel qu'une table ou un bureau.

La base 43 et/ou le support 68 peu(ven)t être réalisée(s) dans une matière plastique comportant une charge minérale telle que du quartz ou un hydrate d'alumine, ce qui permet de limiter l'échauffement des parois 43, 68 placées dans le champ magnétique produit par l'inducteur, sans affaiblir ou perturber ce champ magnétique, et permet le cas échéant de diffuser la chaleur produite par les LEDs.

Par exemple, la base et le support peuvent être fabriqués à partir de plaques de Corian® proposées par la société Du Pont de Nemours.

Par référence à la figure 7, le module d'alimentation - ou générateur - 70 comporte, à l'intérieur d'un boîtier 71, un convertisseur produisant un courant alternatif à une fréquence correspondant sensiblement à celle du circuit résonant de l'appareil à alimenter.

A cet effet, le convertisseur comporte un pont en « H » dont la branche centrale est constituée de l'inducteur 78 raccordé en série avec une capacité 79.

Les quatre interrupteurs 74 à 77 du pont en « H » peuvent être respectivement constitués de quatre transistors de type MOSFET.

La commande des transistors 74 à 77 est assurée par une unité de commande 72, telle qu'un microcontrôleur.

Le microcontrôleur 72 reçoit à cet effet les signaux/données délivré(e)s par un convertisseur 80 raccordé à un capteur 83 de courant sensible au courant traversant l'inductance 78, d'une part, et les signaux/données délivré(e)s par un autre convertisseur 81 servant à mesurer la tension dans le pont, d'autre part.

Selon une variante de réalisation non représentée, le capteur de courant 83 est inséré dans la branche centrale du pont en « H », entre la capacité 79 et l'inductance 78.

Le capteur de courant 83 peut être utilisé pour détecter les variations du courant traversant l'inductance 78 et pour en déduire la présence - ou l'absence - d'un induit dans le champ magnétique produit par l'inductance 78 ; il peut ainsi être utilisé pour détecter la présence d'un appareil à alimenter par induction.

Le microcontrôleur 72 est également relié à un transmetteur 82 radio, pour envoyer des données de commande à l'appareil 20 et/ou pour recevoir des données de commande émises par un appareil de télécommande du générateur 70.

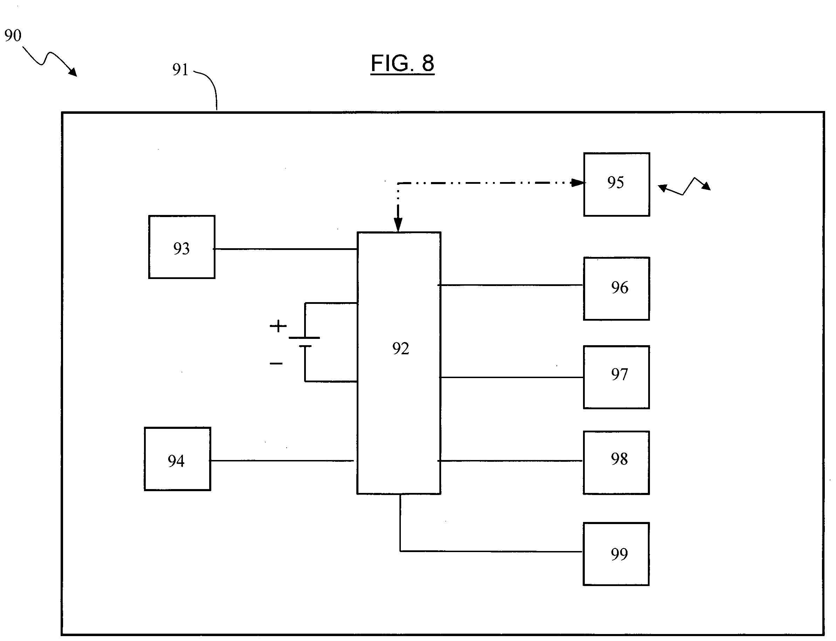

Par référence à la figure 8, l'appareil 90 de télécommande comporte, à l'intérieur d'un boîtier 91, une unité de commande 92, telle qu'un microcontrôleur, qui est relié à un afficheur 93 et à un clavier comportant au moins une touche 94 permettant la validation de choix faits par un utilisateur.

Le microcontrôleur 92 est également relié à un transmetteur 95 radio pour envoyer des données de commande à l'appareil 20 et/ou au générateur 70, ainsi qu'à une horloge 96.

Le microcontrôleur 92 est aussi relié à trois capteurs : un capteur 97 sensible à l'intensité (globale) du flux lumineux ambiant, i.e. du flux incident sur la télécommande 90 ; un capteur 98 sensible à plusieurs bandes spectrales du flux lumineux ambiant ; et un capteur 99 sensible aux mouvements du boîtier 91.

Le capteur 97 peut comporter une seule photodiode et le capteur 98 peut comporter plusieurs photodiodes ou groupes de photodiodes présentant des spectres de réception - de sensibilité - distincts.

L'unité de commande 92 peut être programmée pour émettre, par l'intermédiaire du transmetteur 95, des signaux de commande de l'appareil 20 d'éclairage, afin de faire varier le spectre ou l'intensité de la lumière émise par les LEDs de cet appareil, en fonction notamment des signaux qui lui sont délivrés par les photodiodes.

L'analyse de la lumière ambiante détectée par les photodiodes 97, 98 permet au microcontrôleur 92 de déterminer si le niveau et/ou le spectre d'éclairement requis par un utilisateur demande un éclairage complémentaire par les LEDs de l'appareil 20.

Notamment lorsqu'une seule photodiode est prévue, l'analyse des signaux délivrés par les photodiodes peut se faire « en intégrale », en utilisant par exemple un filtre correspondant à la sensibilité d'un oeil humain.

Lorsque plusieurs photodiodes sont prévues, l'analyse peut se faire « en colorimétrie », en comparant le niveau d'éclairement mesuré dans plusieurs bandes spectrales - i.e. plusieurs plages de longueurs d'onde - à des niveaux d'éclairement déterminés.

Des niveaux d'éclairement prédéterminés peuvent être enregistrés dans une mémoire et peuvent être lus par le microcontrôleur 92 pour assurer un éclairage selon un mode d'éclairage choisi par l'utilisateur. Le mode d'éclairage peut par exemple être choisi parmi un mode d'éclairage constant en lumière blanche, un mode d'éclairage d'intensité variable selon un cycle journalier, ou un mode d'éclairage intensif.

Afin que l'information transmise par les capteurs 97, 98 soit fiable, ceux-ci peuvent être associés à un (équipés d'un) masque permettant d'éviter un éclairement direct des capteurs par l'appareil 20 et/ou par un rayonnement solaire direct.

Dans le même but, les capteurs 97, 98 peuvent être associés à un organe optique leur assurant un large champ de « vision », à un filtre, ou à un verre dépoli.

Selon un mode de réalisation non représenté, les capteurs 97, 98 peuvent être intégrés à l'appareil d'éclairage 20 et reliés à l'unité de commande de cet appareil. Dans ce cas notamment, ces capteurs peuvent être en outre arrangés pour recevoir et détecter des signaux optiques de télécommande émis par un émetteur optique adapté intégré au dispositif 90 de télécommande.

Selon autre un mode de réalisation non représenté, les capteurs 97, 98 peuvent être intégrés à un meuble ou une structure comportant le circuit d'induction, et/ou au générateur 70.

Le capteur 99 de mouvement permet à l'unité de commande 92 de détecter des mouvements du boîtier 91 et de modifier en conséquence les signaux de commande délivrés par l'unité 92, comme décrit ci avant concernant le capteur 35 de mouvement intégré au boîtier de l'appareil 20.

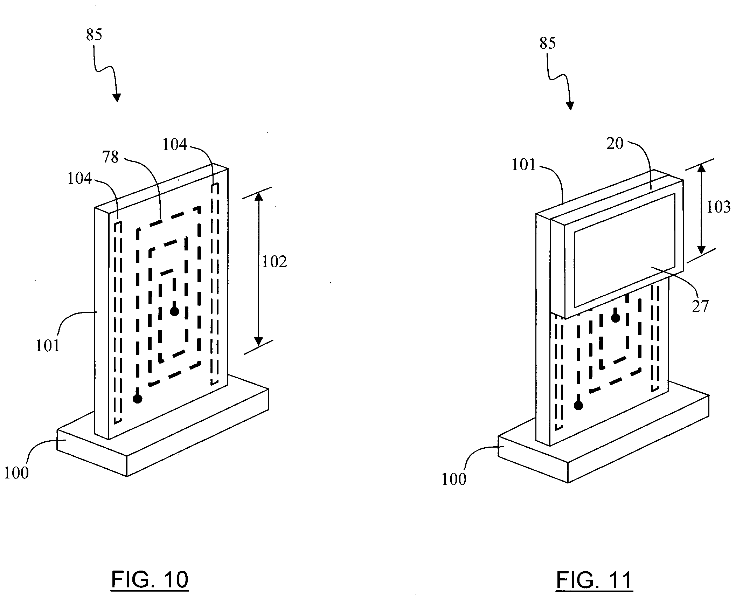

Par référence aux figures 10 et 11, le meuble 85 comporte un socle 100 par l'intermédiaire duquel le meuble peut reposer sur le sol par exemple, ainsi qu'un panneau 101 solidaire du socle et s'étendant verticalement à partir de ce dernier.

Un inducteur 78 conformé en spirale de contour rectangulaire, allongé verticalement, ainsi que deux armatures métalliques 104 en forme de barres verticales, sont disposés à l'intérieur du panneau 101.

Le socle 100 abrite un circuit (73 figure 1) d'alimentation de l'inducteur 78, le circuit (non représenté) étant relié aux deux bornes de l'inducteur. Les armatures magnétiques 104, qui s'étendent sensiblement sur toute la hauteur 102 de l'inducteur 78, permettent à un luminaire 20 (figure 11) dont la hauteur 103 est moindre que celle de l'inducteur et qui est équipé d'aimants adaptés, d'être suspendu au meuble 85 grâce à la force d'attraction mutuelle des aimants et des armatures 104, et ceci à différentes hauteurs le long de l'axe longitudinal vertical du panneau 101.

## Revendications

1. Appareil d'éclairage (20) comportant plusieurs LEDs (23, 24), un boîtier (21) contenant les LEDs et comportant des parois (42 à 44) opaques entourant une ouverture (45), et un guide (27) de lumière transparent s'étendant en regard de l'ouverture (45), les LEDs et le guide étant arrangés pour que le flux lumineux (60) émis par les LEDs soit, en partie au moins, introduit dans le guide par au moins un bord (25, 26) du guide, **caractérisé en ce qu'**il comporte en outre une inductance (22) à laquelle sont raccordées les LEDs, **en ce qu'**au moins une face principale (50, 51) du guide comporte des éléments ou motifs (52) diffusants, et **en ce qu'**il comporte un ou plusieurs aimant(s) (61) solidaire(s) du boîtier et permettant de maintenir l'appareil d'éclairage solidaire d'une paroi (64) incluant un inducteur (78) adapté pour alimenter l'appareil d'éclairage par induction.

2. Appareil d'éclairage selon la revendication 1 dans lequel les LEDs sont solidaires d'au moins un circuit imprimé (40, 41).

3. Appareil d'éclairage selon la revendication 1 ou 2 dans lequel l'inductance est solidaire d'une paroi (43) de l'appareil (20) réalisée dans une matière plastique mélangée à des particules minérales.

4. Appareil d'éclairage selon l'une quelconque des revendications 1 à 3 dans lequel certaines au moins des LEDs présentent un spectre d'émission comportant deux maxima pour deux longueurs d'onde respectives qui sont de préférence situées dans une plage allant de 400 nanomètres environ à 800 nanomètres environ.

5. Appareil d'éclairage selon l'une quelconque des revendications 1 à 4 qui comporte en outre une capacité (28) et un redresseur (29) raccordés en série avec l'inductance (22), la capacité formant avec l'inductance un circuit accordé sur une fréquence située de préférence dans une plage allant de 10 kHz environ à 30 kHz environ.

6. Appareil d'éclairage selon l'une quelconque des revendications 1 à 5 qui comporte plusieurs LEDs raccordées en série, un interrupteur (30, 31) raccordé en série avec les LEDs, ainsi qu'une unité de commande (32) arrangée pour commander l'ouverture et la fermeture de l'interrupteur.

7. Appareil d'éclairage selon la revendication 6 qui comporte un premier groupe de LEDS (23) présentant un spectre d'émission comportant deux maxima pour deux premières longueurs d'onde, un premier interrupteur raccordé en série avec les LEDs du premier groupe de LEDs, un second groupe de LEDS (24) présentant un spectre d'émission comportant deux maxima pour deux secondes longueurs d'onde dont au moins une est distincte des deux premières longueurs d'onde, un second interrupteur raccordé en série avec les LEDs du second groupe de LEDs, ainsi qu'une unité de commande (32) arrangée pour commander l'ouverture et la fermeture des interrupteurs.

8. Appareil d'éclairage à selon l'une quelconque des revendications 6 ou 7 qui comporte un transmetteur (34) radio relié à l'unité de commande (32) et arrangé pour transmettre à l'unité de commande des données de commande transmises à l'appareil d'éclairage par un autre appareil disposé à proximité de l'appareil d'éclairage.

9. Appareil d'éclairage selon l'une quelconque des revendications 6 à 8 qui comporte un capteur (35) de mouvement solidaire du boîtier (21) et relié à l'unité de commande (32), de façon à permettre à l'unité de commande (32) de détecter des mouvements de l'appareil d'éclairage et de modifier en conséquence les signaux de commande délivrés par l'unité (32) aux interrupteurs (30, 31), en particulier pour faire augmenter ou diminuer le flux lumineux émis par les LEDs en fonction des signaux délivrés par le capteur (35).

10. Appareil d'éclairage selon l'une quelconque des revendications 1 à 9 dans lequel l'inductance (22) est en forme de spirale et peut s'étendre sensiblement parallèlement au guide (27) de lumière.

11. Appareil d'éclairage selon l'une quelconque des revendications 1 à 10 qui comporte un réflecteur (62) s'étendant contre ou sur une face principale (51) du guide.

12. Appareil d'éclairage selon l'une quelconque des revendications 1 à 11 dans lequel l'espacement mutuel des éléments ou motifs (52) diffusants varie le long d'au moins un axe.

13. Appareil d'éclairage selon l'une quelconque des revendications 1 à 12 dans lequel une partie au moins du guide de lumière est en forme de plaque plane.

14. Appareil d'éclairage selon l'une quelconque des revendications 1 à 13 dans lequel l'inductance (22) est essentiellement constituée de conducteurs (46 à 48) de section sensiblement rectangulaire et revêtus d'un - ou noyés dans un - matériau électriquement isolant.

15. Système d'alimentation par induction d'un appareil d'éclairage selon l'une quelconque des revendications 1 à 14, qui comporte un meuble ou une structure équipé(e) d'un inducteur (78), un générateur (73) arrangé pour alimenter l'inducteur, un appareil (90, 92) de télécommande du générateur et/ou de l'appareil d'éclairage, et au moins un capteur (97, 98) sensible au flux lumineux incident ambiant, en particulier plusieurs capteurs respectivement sensibles à différentes bandes spectrales du flux lumineux incident ambiant le(s) capteur(s) (97, 98) étant intégré(s) à l'appareil d'éclairage, à l'appareil de télécommande, au meuble ou à la structure, le(s) capteur(s) et l'appareil de télécommande étant arrangés pour faire varier le spectre ou l'intensité de la lumière émise par les LEDs de l'appareil d'éclairage en fonction de signaux délivrés par le(s) capteur(s).

## Patentansprüche

1. Beleuchtungsvorrichtung (20), mehrere LED (23, 24) umfassend, ein Gehäuse (21), das die LED enthält und opake Wände (42 bis 44) aufweist, die eine Öffnung (45) umgeben, und einen transparenten Lichtleiter (27), der sich der Öffnung (45) zugewandt befindet, wobei die LED und der Lichtleiter derart angeordnet sind, dass der Lichtstrom (60), der von den LED abgestrahlt wird, durch mindestens einen Rand (25, 26) des Lichtleiters mindestens teilweise in den Lichtleiter eintritt, **dadurch gekennzeichnet, dass** sie außerdem eine Drossel (22) aufweist, an die die LED angeschlossen sind, dadurch, dass mindestens eine Hauptfläche (50, 51) des Lichtleiters Elemente oder streuende Motive (52) trägt, und dadurch, dass sie einen oder mehrere Magnet(e) (61), mit dem Gehäuse fest verbunden, aufweist, die erlauben, die Beleuchtungsvorrichtung mit einer Wand (64) verbunden zu halten, die eine zur Stromversorgung der Beleuchtungsvorrichtung durch Induktion geeignete Induktionsspule (78) trägt.

2. Beleuchtungsvorrichtung nach Patentanspruch 1, in der die LED mit mindestens einer gedruckten Schaltung (40, 41) fest verbunden sind.

3. Beleuchtungsvorrichtung nach Patentanspruch 1 oder 2, in der die Drossel mit einer Wand (43) der Vorrichtung (20) fest verbunden ist, die aus einem mit mineralischen Teilchen gemischten Kunststoff gefertigt ist.

4. Beleuchtungsvorrichtung nach irgendeinem der Patentansprüche 1 bis 3, in der mindestens ein Teil der LED ein Emissionsspektrum aufweist, das zwei Maxima in zwei entsprechenden Wellenlängen aufweist, die sich vorzugsweise in einem Bereich zwischen ungefähr 400 Nanometern und ungefähr 800 Nanometern befinden.

5. Beleuchtungsvorrichtung nach irgendeinem der Patentansprüche 1 bis 4, die außerdem einen Kondensator (28) und einen Gleichrichter (29) mit der Drossel (22) in Reihe geschaltet aufweist, wobei der Kondensator mit der Drossel einen Schaltkreis bildet, der auf eine Frequenz abgestimmt ist, die sich vorzugsweise in einem Bereich zwischen ungefähr 10 kHz und ungefähr 30 kHz befindet.

6. Beleuchtungsvorrichtung nach irgendeinem der Patentansprüche 1 bis 5, die mehrere in Reihe geschaltete LED aufweist, einen mit den LED in Reihe geschalteten Schalter (30, 31), sowie eine Steuereinheit (32), die dafür eingerichtet ist, die Öffnung und das Schließen des Schalters zu steuern.

7. Beleuchtungsvorrichtung nach Patentanspruch 6, die eine erste LED-Gruppe (23) umfasst, die ein Emissionsspektrum aufweist, das zwei Maxima in zwei ersten Wellenlängen aufweist, einen mit den LED der ersten Gruppe in Reihe geschalteten ersten Schalter, eine zweite LED-Gruppe (24), die ein Emissionsspektrum aufweist, das zwei Maxima in zwei zweiten Wellenlängen aufweist, von denen mindestens eine sich von den beiden ersten Wellenlängen unterscheidet, einen mit den LED der zweiten Gruppe in Reihe geschalteten zweiten Schalter, sowie eine Steuereinheit (32), die dafür eingerichtet ist, die Öffnung und das Schließen der Schalter zu steuern.

8. Beleuchtungsvorrichtung nach irgendeinem der Patentansprüche 6 oder 7, die einen Funksender (34) aufweist, der mit der Steuereinheit (32) verbunden und dafür eingerichtet ist, der Steuereinheit Steuerdaten zu übermitteln, die von einer in der Nähe der Beleuchtungsvorrichtung angeordneten anderen Vorrichtung an die Beleuchtungsvorrichtung gesendet werden.

9. Beleuchtungsvorrichtung nach irgendeinem der Patentansprüche 6 bis 8, die einen Bewegungsmelder (35) mit dem Gehäuse (21) fest verbunden und an die Steuereinheit (32) angeschlossen umfasst, derart, dass der Steuereinheit (32) ermöglicht wird, Bewegungen der Beleuchtungsvorrichtung festzustellen und infolge dieser die von der Einheit (32) an die Schalter (30, 31) ausgegebenen Steuersignale zu ändern, insbesondere um in Abhängigkeit von den vom Sensor (35) ausgegebenen Signalen den von den LED abgestrahlten Lichtstrom zu erhöhen oder zu verringern.

10. Beleuchtungsvorrichtung nach irgendeinem der Patentansprüche 1 bis 9, in der die Drossel (22) die Form einer Spirale hat und sich im Wesentlichen parallel zum Lichtleiter (27) erstrecken kann.

11. Beleuchtungsvorrichtung nach irgendeinem der Patentansprüche 1 bis 10, die einen Reflektor (62) umfasst, der sich an oder auf einer Hauptfläche (51) des Lichtleiters befindet.

12. Beleuchtungsvorrichtung nach irgendeinem der Patentansprüche 1 bis 11, in der der Abstand der streuenden Elemente oder Motive (52) voneinander längs mindestens einer Achse variiert.

13. Beleuchtungsvorrichtung nach irgendeinem der Patentansprüche 1 bis 12, in der mindestens ein Teil des Lichtleiters die Form einer ebenen Platte hat.

14. Beleuchtungsvorrichtung nach irgendeinem der Patentansprüche 1 bis 13, in der die Drossel (22) im Wesentlichen aus Leitern (46 bis 48) mit im Wesentlichen rechteckigem Querschnitt besteht, die mit einem elektrisch isolierenden Werkstoff überzogen oder in ihn eingebettet sind.

15. Induktionsstromversorgungssystem einer Beleuchtungsvorrichtung nach irgendeinem der Patentansprüche 1 bis 14, das ein Möbelstück oder eine Konstruktion umfasst, das/die mit einer Induktionsspule (78), einem Stromgenerator (73), der zur Versorgung der Induktionsspule eingerichtet ist, einer Vorrichtung (90, 92) zur Fernsteuerung des Generators und/oder der Beleuchtungsvorrichtung und mindestens einem Sensor (97, 98), der auf den einfallenden Umgebungslichtstrom empfindlich ist, versehen ist, insbesondere mit mehreren Sensoren, die jeweils auf verschiedene Spektralbereiche des einfallenden Umgebungslichtstroms empfindlich sind, wobei der/die Sensor/en (97, 98) in die Beleuchtungsvorrichtung, in die Fernsteuerungsvorrichtung, in das Möbelstück oder in die Konstruktion eingebaut ist/sind, wobei der/die Sensor/en und die Fernsteuerungsvorrichtung dafür eingerichtet sind, das Spektrum oder die Intensität des von den LED der Beleuchtungsvorrichtung abgestrahlten Lichtes in Abhängigkeit von von dem/n Sensor/en ausgegebenen Signal zu variieren.

## Claims

1. Lighting apparatus (20) comprising a plurality of LEDs (23, 24), a housing (21) containing the LEDs and having opaque walls (42 to 44) surrounding an opening (45), and a transparent light guide (27) extending facing the opening (45), the LEDs and the light guide being arranged so that the light flux (60) emitted by the LEDs penetrates, at least in part, into the guide through at least one edge (25, 26) of the guide, the lighting apparatus being **characterized in that** it further comprises an inductor (22) to which the LEDs are connected, **in that** at least one main face (50, 51) of the guide includes diffusing elements or patterns (52), and **in that** the lighting apparatus includes one or more magnets (61) secured to the housing and enabling it to be held secured to a wall (64) including a coil (78) adapted to power the lighting apparatus by induction.

2. Lighting apparatus according to claim 1, wherein the LEDs are secured to at least one printed circuit (40, 41) .

3. Lighting apparatus according to claim 1 or claim 2, wherein the inductor is secured to a wall (43) of the apparatus (20) made of plastics material mixed with mineral particles.

4. Lighting apparatus according to any one of claims 1 to 3, wherein at least some of the LEDs present an emission spectrum having two maxima at two respective wavelengths that are preferably situated in a range extending from approximately 400 nanometeters (nm) to approximately 800 nm.

5. Lighting apparatus according to any one of claims 1 to 4, further comprising a capacitor (28) and a rectifier (29) connected in series with the inductor (22), the capacitor and the inductor together forming a circuit tuned to a frequency that is preferably situated in a range extending from approximately 10 kilohertz (kHz) to approximately 30 kHz.

6. Lighting apparatus according to any one of claims 1 to 5 that comprises a plurality of LEDs connected in series, a switch (30, 31) connected in series with the LEDs, and a control unit (30) arranged to control opening and closing of the switch.

7. Lighting apparatus according to claim 6 that comprises a first group of LEDs (23) presenting an emission spectrum having two maxima for two first wavelengths, a first switch connected in series with the LEDs of the first group of LEDs, a second group of LEDs (24) presenting an emission spectrum having two maxima for two second wavelengths, at least one of which is different from the two first wavelengths, a second switch connected in series with the LEDs of the second group of LEDs, and a control unit (32) arranged to control opening and closing of the switches.

8. Lighting apparatus according to claim 6 or claim 7, including a radio transmitter (34) connected to the control unit (32) and arranged to transmit control data to the control unit, which data is transmitted to the lighting apparatus by another apparatus arranged in the proximity of the lighting apparatus.

9. Lighting apparatus according to any one of claims 6 to 8, including a movement sensor (35) secured to the housing (21) and connected to the control unit (32) so as to enable the control unit (32) to detect movements of the lighting apparatus and to modify correspondingly the control signals delivered by the unit (32) to the switches (30, 31), in particular in order to increase or decrease the light flux emitted by the LEDs as a function of the signals delivered by the sensor (35).

10. Lighting apparatus according to any one of claims 1 to 9, wherein the inductor (22) is in the form of a spiral and may extend substantially parallel to the light guide (27).

11. Lighting apparatus according to any one of claims 1 to 10, including a reflector (62) extending against or over a main face (51) of the guide.

12. Lighting apparatus according to any one of claims 1 to 11, wherein the mutual spacing of the diffusing elements or patterns (52) varies along at least one axis.

13. Lighting apparatus according to any one of claims 1 to 12, wherein at least a portion of the light guide is in the form of a plane plate.

14. Lighting apparatus according to any one of claims 1 to 13, wherein the inductor (22) is constituted essentially by conductors (46 to 48) of substantially rectangular section and coated in - or embedded in - electrically insulating material.

15. A system for inductively powering lighting apparatus according to any one of claims 1 to 14, the system comprising a piece of furniture or a structure fitted with a coil (78), a generator (73) arranged to power the coil, a remote control (90, 92) for remotely controlling the generator and/or the lighting apparatus, at least one sensor (97, 98) responsive to the ambient incident light flux, and in particular a plurality of sensors responsive to respective different spectral bands of the ambient incident light flux, the sensor(s) (97, 98) being integrated in the lighting apparatus, in the remote control, in the piece of furniture, or in the structure, the sensor(s) and the remote control being arranged to cause the spectrum or the intensity of the light emitted by the LEDs of the lighting apparatus to vary as a function of signals delivered by the sensor(s).
